(19) Europäisches Patentamt
European Patent Office
Office européen des brevets

(11) EP 2 261 630 B1

(12) **FASCICULE DE BREVET EUROPEEN**

(45) Date de publication et mention
de la délivrance du brevet:
**03.05.2017 Bulletin 2017/18**

(21) Numéro de dépôt: **10290308.5**

(22) Date de dépôt: **08.06.2010**

(51) Int Cl.:
***G01M 13/02*** *(2006.01)*

(54) **BANC DE CHARGE DYNAMIQUE**

TESTVORRICHTUNHG ZUM ÜBERTRAGEN DYNAMISCHER KRÄFTE

DYNAMIC LOAD TEST BENCH

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **12.06.2009 FR 0902860**

(43) Date de publication de la demande:
**15.12.2010 Bulletin 2010/50**

(73) Titulaire: **MBDA France**
**92350 Le Plessis-Robinson (FR)**

(72) Inventeur: **Rossi Rinaldo, Jean Constantino**
**75116 Paris (FR)**

(74) Mandataire: **Gevers & Orès**
**41 avenue de Friedland**
**75008 Paris (FR)**

(56) Documents cités:
**EP-A2- 0 239 264          DE-A1- 4 216 973**
**DE-A1-102004 021 645     FR-A- 1 600 552**
**US-A1- 2004 255 698      US-A1- 2006 070 457**

## Description

La présente invention concerne un banc de charge dynamique destiné à exercer, sur l'arbre rotatif d'un mécanisme à tester, tel qu'un actionneur ou analogue, des charges radiales et couples variables, de manière à reproduire aussi fidèlement que possible les sollicitations ou contraintes mécaniques subies par l'actionneur lors de conditions réelles d'utilisation.

Dans une application préférentielle, quoique non exclusive, l'arbre de sortie de l'actionneur rotatif porte, de manière solidaire en rotation, une surface aérodynamique d'un aéronef, telle qu'une gouverne de missile ou autre engin circulant à grande vitesse dans un milieu fluide, et il est alors soumis à des efforts (charges radiales) et des moments de charnière (couples) évolutifs et élevés, engendrés par les forces aérodynamiques s'exerçant sur la gouverne selon l'angle de braquage de celle-ci.

Aussi, le banc de charge dynamique de l'invention a pour but de reproduire aussi bien des charges radiales que des couples variables, fonction de l'angle de rotation pris par l'arbre de sortie de l'actionneur rotatif, représentatif du braquage exécuté par la gouverne. Et la valeur de ces efforts et moments pourra être modulée en fonction du temps pour représenter les différents points de vol du missile (variations lentes et/ou rapides de la vitesse, changements de trajectoire et d'altitude, ...) et se rapprocher au mieux des conditions réelles rencontrées, c'est-à-dire des charges opérationnelles aérodynamiques encaissées par l'actionneur pour, par la suite, optimiser sa conception.

On connaît déjà des bancs de charge dynamique pour de tels actionneurs, qui sont basés sur des moyens commandables de reproduction du couple uniquement, à partir d'une barre de torsion ou d'un générateur de couple.

Dans le premier cas, la barre de torsion des moyens de reproduction du banc est liée, d'un côté, directement à l'arbre de l'actionneur rotatif à tester et, de l'autre côté, est bridée de sorte que, quand l'actionneur se débat angulairement, il engendre un couple proportionnel à l'angle de rotation du braquage. Bien que d'une conception très basique, ces moyens à barre de torsion exercent des couples de rappel qui ne permettent pas d'engendrer des charges déstabilisantes et/ou évolutives en fonction du braquage de la gouverne. De plus, il sont trop limités et ne permettent pas de valider, de façon fiable, les performances des actionneurs dans des conditions réelles de vol, si bien que, par manque de données claires et précises, les moyens de reproduction à barre de torsion sont surspécifiés pour conserver des marges.

Dans le second cas, le générateur de couple des moyens de reproduction est directement accouplé à l'actionneur et est défini, en raison des performances dynamiques requises, par un moteur-couple hydraulique. Si des couples importants peuvent être ainsi testés, en revanche, les mouvements relatifs apparaissant entre le moteur-couple et l'actionneur posent des problèmes par leur inertie et leur liaison rigide puisque, lorsque l'arbre de l'un tourne, l'autre tend à s'opposer de sorte que des chocs peuvent se produire allant jusqu'à détruire le matériel. Cela peut être amplifié par les moteurs hydrauliques qui sont surpuissants.

En plus de n'exercer que le couple sur l'arbre rotatif à tester (un autre banc spécifique étant nécessaire pour les charges radiales), ces bancs de charge dynamique ne répondent pas souvent à toutes les attentes et exigences souhaitées telles que :

- avoir une inertie apparente faible et un jeu d'accouplement nul pour ne pas perturber l'actionneur à tester ; idéalement, se comporter du point de vue dynamique comme un couple pur ;
- disposer d'une bande passante élevée de la boucle d'asservissement en couple, au moins du double de celle de l'actionneur à tester pour reproduire le profil de couple commandé, sans retard significatif ;
- disposer d'une saturation de vitesse et d'accélération nettement supérieure à celle de l'actionneur ;
- autoriser des désalignements fonctionnels entre l'actionneur et le banc pour une mise en oeuvre aisée, ce qui implique une certaine souplesse de la liaison souvent incompatible avec une bande passante élevée de la boucle de couple ;
- assurer une gestion efficace des couples appliqués pour éviter toute surcharge, survitesse et mise en butée accidentelle qui pourrait s'avérer destructrice, ceci même en cas de défaillance de l'actionneur (coupure d'alimentation, panne, etc ...).

Certes, on connaît également, par le brevet US 7 080 565, un banc de charge dynamique qui permet d'appliquer sur l'arbre rotatif de l'actionneur à tester des efforts radiaux et couples dynamiques. Cependant, les moyens commandables pour reproduire ceux-ci comprennent pour cela deux équipements distincts indépendamment l'un de l'autre avec des sous-ensembles spécifiques. Il est en particulier nécessaire de découpler mécaniquement l'application des efforts radiaux et des couples par des systèmes à cardans, glissières, articulations... compliqués. De plus, un encodeur doit être prévu pour mesurer la rotation de l'arbre de sortie de l'actionneur. Et les nombreux sous-ensembles et équipements en présence limitent par ailleurs l'excitation du banc à des fréquences élevées qui peuvent engendrer des résonnances parasites dommageables et entraînent également une mise en oeuvre délicate.

On connaît de plus, par le brevet EP 0 239 264, un appareil d'essai destiné à appliquer un couple pur sur des arbres d'entrée et de sortie colinéaires d'une transmission type boîte de vitesses pour moteur d'aéronef. Pour cela, il comporte notamment un dispositif d'application du couple à deux modules parallèles et symétriques par rapport aux arbres, et comportant des mécanismes à engrenages multiples entraînés par des actionneurs rotatifs pour pouvoir passer la puissance importante du moteur. Cependant, un tel appareil ne permet pas d'appliquer de charges radiales.

La présente invention a pour but de remédier aux inconvénients ci-dessus et de proposer un banc de charge dynamique dont la réalisation des moyens commandables de reproduction permet d'exercer, de façon sûre, fiable et sans risques, des charges radiales et des couples variables au moins comparables à ceux rencontrés par le mécanisme à tester dans des conditions réelles d'utilisation, de manière à optimiser la conception et la mise au point des mécanismes tels que les actionneurs rotatifs.

A cet effet, le banc de charge dynamique destiné à exercer, sur l'arbre rotatif d'un mécanisme à tester, tel qu'un actionneur ou analogue, des couples variables délivrés par des moyens commandables de reproduction se composant de deux modules de reproduction identiques, disposés parallèlement et symétriquement par rapport audit arbre rotatif à tester, est remarquable, selon l'invention, en ce que, pour permettre de plus d'exercer des charges radiales sur ledit arbre rotatif, chaque module comporte ;

- un moteur-couple à arbre d'entraînement parallèle audit arbre à tester, lesdits moteurs-couples desdits deux modules tournant dans le même sens ;
- une barre de torsion solidaire coaxialement, par l'une de ses extrémités, dudit arbre d'entraînement du moteur-couple ; et
- une liaison à bielle-manivelles reliant l'autre extrémité de ladite barre de torsion audit arbre à tester dans un plan perpendiculaire à ce dernier et auxdits arbres d'entraînement, de manière que, dans ledit plan perpendiculaire, lesdites bielles des deux modules soient parallèles et symétriquement décalées de 180° l'une de l'autre par rapport à l'arbre à tester et reliées à leurs arbres d'entraînement respectifs par lesdites manivelles.

Ainsi, la réalisation modulaire des moyens de reproduction sous la forme de deux modules identiques et symétriques par rapport à l'arbre de l'actionneur à structure cinématique par moteur-couple, barre de torsion et liaison bielle-manivelles permet d'exercer simultanément des charges radiales et des couples variables sur celui-ci, contrairement aux réalisations antérieures nécessitant deux bancs différents ou deux équipements distincts indépendants d'un même banc. De cette conception, il en découle mécaniquement une réalisation plus simple et plus fiable du banc et une plus grande dynamique de fonctionnement sans les problèmes inhérents aux fréquences d'excitation.

Avantageusement, ledit arbre d'entraînement de chaque moteur-couple est creux et présente un passage axial traversant à l'intérieur duquel est intégrée ladite barre de torsion avec l'une de ses extrémités solidaire dudit arbre creux et l'autre extrémité sortant dudit arbre creux et reliée à ladite liaison bielle-manivelle correspondante. Par cet agencement coaxial de la barre de torsion à l'intérieur de l'arbre d'entraînement, les deux modules présentent une compacité appréciable, de sorte que l'encombrement du banc est fortement réduit, contrairement à la réalisation précitée antérieure, où la barre de torsion prolonge l'arbre d'entraînement du moteur.

Dans un mode préféré de réalisation, lesdites bielles de liaison sont reliées, d'un côté, audit arbre rotatif à tester par une manivelle commune double montée en son centre sur ledit arbre rotatif et portant, à ses extrémités diamétralement opposées par rapport à son centre, lesdites bielles respectivement, et, de l'autre côté, auxdites barres de torsion respectives par deux manivelles simples identiques, montées décalées de 180° l'une de l'autre sur lesdites barres de torsion.

Ainsi, les deux bielles, agencées symétriquement et perpendiculairement à l'arbre rotatif du mécanisme à tester (actionneur) transmettent (l'une pousse, l'autre tire) et impriment sur celui-ci des charges radiales et couples variables souhaités, correspondant aux efforts radiaux et aux moments de charnière précités encaissés par l'arbre de l'actionneur d'une gouverne sur laquelle s'exercent des forces aérodynamiques importantes.

Grâce aux deux modules symétriques, les bielles agissent comme les bras opposés d'un parallélogramme déformable sur l'arbre de l'actionneur, dans un plan perpendiculaire à celui-ci, en reproduisant de manière simple et sûre les efforts et couples s'exerçant sur ledit arbre dans les conditions réelles d'utilisation.

Avantageusement, lesdites bielles sont montées sur les manivelles respectives desdites liaisons par l'intermédiaire d'articulations à débattement angulaire, telles que par exemple des articulations du type sphérique, à rotule. Ainsi, avec un tel montage, il n'est pas nécessaire de prévoir un positionnement précis entre l'actionneur à tester et les deux modules grâce aux articulations à rotules qui confèrent un isostatisme naturel au banc dans son ensemble et rattrapent les différents jeux et débattements fonctionnels.

Dans un mode particulier de réalisation, l'entraxe de ladite manivelle double séparant l'arbre rotatif à tester de chaque bielle est identique à l'entraxe de chaque manivelle simple séparant ladite barre de torsion de ladite bielle correspondante. Ainsi, lesdites bielles de transmission sont agencées orthogonalement à l'arbre rotatif de l'actionneur à tester et aux arbres d'entraînement des moteurs-couples.

Pour des raisons de performance, fiabilité, faible inertie et de couples volumique et massique importants, on préfère que lesdits moteurs-couples des modules soient électriques notamment du type sans balais. On évite, par ailleurs, les systèmes hydrauliques complexes et installations coûteuses (compresseurs, accumulateurs, ...) à prévoir avec des moteurs-couples hydrauliques.

De plus, lesdites barres de torsion sont calibrées en raideur de torsion, celles-ci fonctionnant comme des couplemètres étalonnés (la différence angulaire d'une extrémité à l'autre de la barre correspondant à un couple de torsion transmis donné).

Selon une autre caractéristique, chaque module comprend de plus un capteur de position angulaire dudit arbre d'entraînement du moteur-couple et un capteur de position angulaire de ladite barre de torsion correspondante, et lesdits moyens commandables comportent un dispositif électronique d'asservissement de la position angulaire délivrée par chaque capteur desdits moteurs-couples en fonction de la position angulaire de l'arbre rotatif dudit mécanisme à tester, et un dispositif électronique de puissance relié audit dispositif électronique d'asservissement et alimentant lesdits moteurs-couples.

De préférence, chacun des modules comporte des moyens électroniques et/ou mécaniques pour limiter le débattement et la vitesse angulaires de chaque moteur-couple. Ainsi, en cas de défaillance de l'actionneur, son débattement est limité par celui des moteurs-couples et la raideur des barres de torsion, de sorte qu'il n'est pas endommagé, contrairement aux bancs précédents.

Les figures du dessin annexé feront bien comprendre comment l'invention peut être réalisée. Sur ces figures, des références identiques désignent des éléments semblables.

La figure 1 est une vue en plan schématique et en coupe partielle d'un exemple de réalisation du banc de charge dynamique conformément à l'invention.

Les figures 2 et 3 sont des vues schématiques respectivement de côté et de dessus dudit banc de charge dynamique, illustré sur la figure 1.

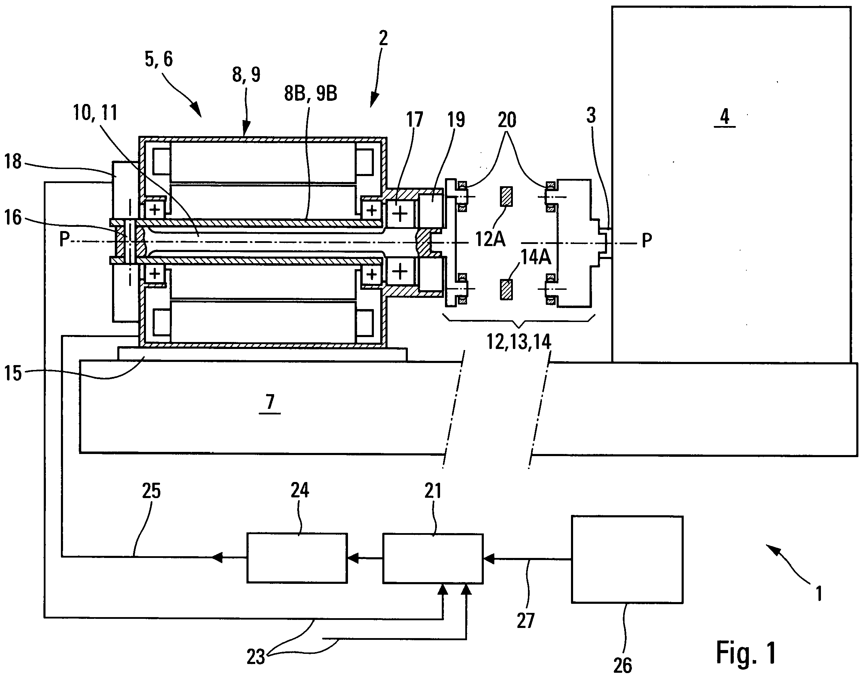

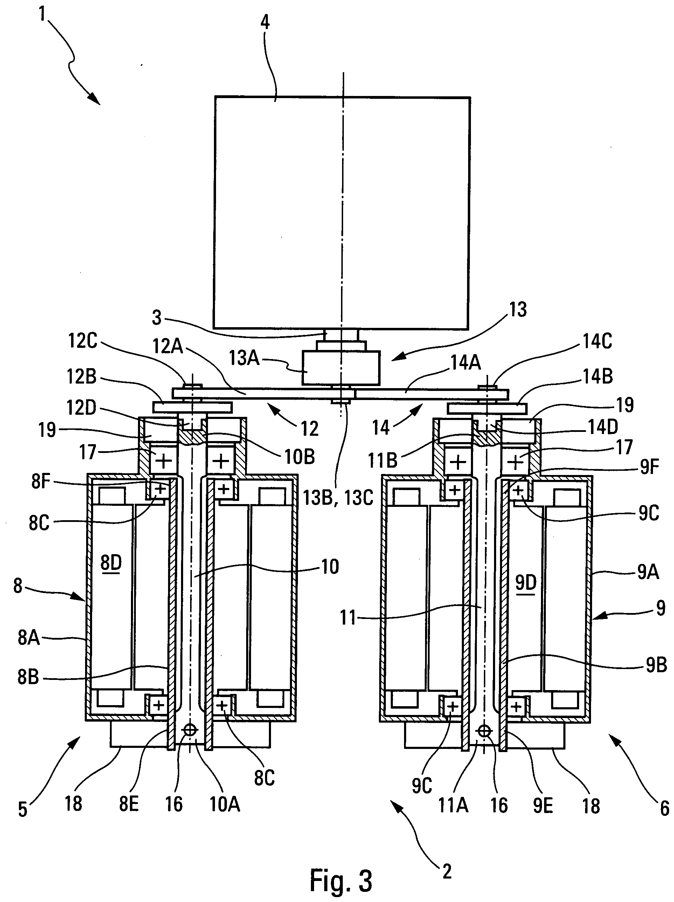

Le banc de charge dynamique représenté sur les figures 1 à 3 comporte des moyens commandables 2 pour exercer des charges radiales et des couples variables sur l'arbre tournant 3 d'un actionneur rotatif à tester 4. Comme on l'a indiqué précédemment, le but est de reproduire, aussi fidèlement que possible, les contraintes ou sollicitations appliquées sur l'arbre de l'actionneur sur lequel est montée la gouverne aérodynamique non illustrée d'un missile, par suite de changements brusques de direction et de vitesse de celui-ci et, donc, du braquage de la gouverne. Et de concevoir ainsi des actionneurs avec des arbres, structurellement et fonctionnellement sûrs et fiables.

Pour cela, les moyens commandables 2 sont définis par deux modules de reproduction des charges radiales et des couples variables 5 et 6, qui sont identiques et agencés symétriquement et parallèlement par rapport à l'axe géométrique de l'arbre 3 de l'actionneur. Chaque module 5, 6 se compose notamment d'un moteur-couple 8, 9, d'une barre de torsion 10, 11 et d'une liaison à bielle-manivelles 12, 13, 14 avec l'arbre 3 de l'actionneur 4.

Structurellement, chaque moteur-couple 8, 9 comporte un corps cylindrique 8A, 9A à l'intérieur duquel est monté rotatif un arbre d'entraînement 8B, 9B par l'intermédiaire de roulements internes 8C, 9C. Dans cet exemple, les moteurs-couples sont de préférence électriques, du type sans balais (brushless) pour des raisons de performance, fiabilité, faible inertie, couple important, ... et la commande en rotation des arbres d'entraînement se fait par des composants électriques (stator, rotor, ...) symbolisés en 8D, 9D sur la figure 1 et logés dans le corps cylindrique 8A, 9A, autour de l'arbre correspondant. Bien entendu, tout autre type de moteur-couple, tel que fluidique (hydraulique), pourrait être utilisé. Par ailleurs, le banc de charge dynamique 1 comporte un support mécanique 7 rigide, stable, sur lequel sont rapportés l'actionneur à tester 3 et, par l'intermédiaire d'une embase commune 15, les deux moteurs-couples 8, 9 par leurs corps cylindriques.

Géométriquement, on voit sur les figures 1 à 3, que les arbres d'entraînement parallèles 8B, 9B des moteurs-couples sont respectivement disposés symétriquement par rapport à l'arbre tournant 3 de l'actionneur 4, les axes géométriques des arbres d'entraînement 8B, 9B et de l'arbre à tester 3 étant contenus dans un même plan horizontal P.

L'arbre d'entraînement 8B, 9B de chaque moteur-couple 8, 9 est avantageusement creux et reçoit à l'intérieur la barre de torsion 10, 11 coaxiale à son arbre respectif et destinée à transmettre le couple de torsion imprimé par l'arbre d'entraînement à l'arbre de l'actionneur via la liaison à bielle-manivelles. Pour cela, une première extrémité 10A, 11A de chaque barre de torsion est liée rigidement à une première extrémité 8E, 9E de l'arbre creux par un élément de fixation 16, tel qu'une goupille ou autre, assurant la solidarisation en rotation de l'arbre avec la barre de torsion correspondante. Et la seconde extrémité 10B, 11B de chacune d'elles, tournée vers l'arbre de l'actionneur, débouche axialement de la seconde extrémité 8F, 9F de l'arbre d'entraînement, sans liaison avec cette dernière, et est solidaire de la liaison à bielle-manivelle 12, 14. La seconde extrémité 10B, 11B de chaque barre de torsion est alors portée par un roulement 17 logé dans le corps cylindrique. Les barres de torsion identiques des deux modules sont bien entendu calibrées en raideur de torsion.

Par ailleurs, on remarque que les premières extrémités 8E, 9E des arbres d'entraînement (et donc celles des barres de torsion) font saillie par rapport à leurs corps correspondants 8A, 9A et qu'elles portent des capteurs de position angulaire 18 desdits arbres 8B, 9B (rotors des moteurs-couples brushless). Il en va de même pour les secondes extrémités 10B, 11B des barres de torsion 10, 11, sur lesquelles sont montés des capteurs 1 9 de position angulaire logés dans les corps cylindriques correspondants. Les capteurs 18, 19 utilisés doivent être précis pour avoir des boucles d'asservissement à large bande passante et, par exemple, des capteurs du type résolveur, codeur, potentiomètre ou autre peuvent être envisagés.

En ce qui concerne les liaisons entre les barres de torsion 10, 11 des modules et l'arbre 3 de l'actionneur 4, elles comprennent deux bielles respectives et parallèles 12A, 14A reliées, d'un côté, par des manivelles respectives 12B, 14B aux barres de torsion 10, 11 et de l'autre côté, par une manivelle double commune 13, à l'arbre 3 de l'actionneur 4. Les deux bielles de liaison 12A, 14A sont ainsi disposées dans un plan perpendiculaire aux axes géométriques parallèles des arbres d'entraînement 8B, 9B (et donc des barres de torsion) des modules 5, 6 et de l'arbre de l'actionneur, et sont agencées symétriquement décalées de 180° l'une de l'autre par rapport à l'arbre 3 de l'actionneur. On voit, sur la figure 1, que les liaisons 12, 13, 14 sont illustrées de manière éclatée par souci de clarté.

En particulier, chaque manivelle simple 12B, 14B présente, au voisinage de ses extrémités, deux manetons parallèles 12C, 12D, 14C, 14D, coudés à 90° et de manière opposée par rapport au bras ou corps de la manivelle, un premier maneton coudé 12D, 14D de chaque manivelle étant rendu coaxialement solidaire de la seconde extrémité 8F, 9F de la barre de torsion correspondante, tandis que le second maneton coudé 1 2C, 14C porte l'une des extrémités de la bielle de liaison 1 2A, 14A.

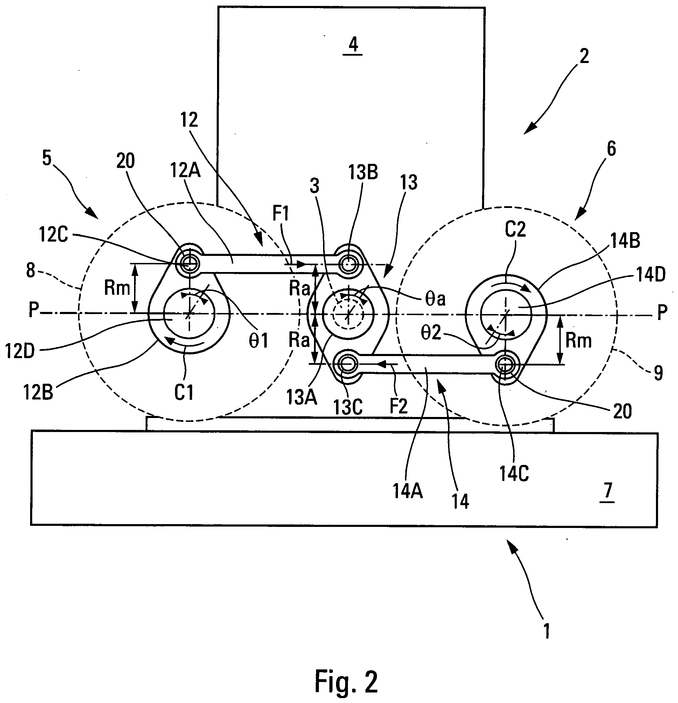

On remarque notamment, sur la figure 2, que les manivelles simples 12B, 14B sont montées de manière décalée de 180° l'une de l'autre sur les barres de torsion respectives 10, 11, de sorte que, sur cette figure, la manivelle 12B est tournée vers le haut, tandis que la manivelle 14B est tournée vers le bas.

Par ailleurs, la manivelle double commune 13 présente, d'un côté, un maneton central 13A s'accouplant à l'arbre 3 de l'actionneur (par exemple, des ergots radiaux non représentés solidarisent en rotation l'arbre au maneton central) et, de l'autre côté, deux manetons d'extrémité diamétralement opposés 13B, 13C par rapport au maneton central 13A et sur lesquels sont montées respectivement les secondes extrémités des bielles de liaison 12A, 14A.

On prévoit, de plus, entre les extrémités des deux bielles 12A, 14A et leurs manetons respectifs 12C, 14C, 13B, 13C des manivelles 12B, 14B, 13, des articulations à débattement angulaire 20, telles que des articulations sphériques à rotule ou des articulations élastiques.

On remarque également, dans la représentation illustrée figure 2, que l'entraxe Ra séparant chaque maneton opposé 13B, 13C du maneton central 13A de la manivelle double 13 est égal à l'entraxe Rm séparant les deux premiers manetons 12D, 14D des deux seconds manetons 12C, 14C des manivelles simples 12B, 14B, de sorte que les deux bielles parallèles de liaison 12A, 14A se trouvent agencées horizontalement sur la figure 2 et orthogonalement à l'arbre 3 de l'actionneur. Bien entendu, d'autres rapports pourraient être choisis sans nuire au fonctionnement du banc, les deux bielles parallèles étant alors simplement inclinées par rapport à l'horizontale.

Ces moyens commandables de reproduction 2 des charges radiales et des couples par les deux modules 5, 6 comprennent aussi des dispositifs électroniques. Par exemple, comme le montre la figure 1, un dispositif électronique d'asservissement 21 permet de connaître la position angulaire de chacun des deux moteurs-couples rotatifs, en fonction de la position angulaire de l'arbre de l'actionneur, à partir des deux capteurs de position angulaire 18 reliés par des liaisons respectives 23 au dispositif d'asservissement. On peut ainsi réguler le couple appliqué sachant que celui-ci est proportionnel à la différence angulaire entre la position angulaire du moteur-couple et celle de l'actionneur. En sortie du dispositif électronique d'asservissement 21 est prévu un dispositif électronique de puissance 24 pour alimenter par exemple les moteurs-couples 8, 9 par une liaison 25, en limitant le couple délivré et la vitesse maximum à des valeurs compatibles aves les possibilités de l'actionneur à tester, évitant l'endommagement de celui-ci.

Bien entendu, une électronique de test 26 est reliée au dispositif d'asservissement 21 par une liaison 27 et inclut notamment des programmes spécifiques pour chaque type d'actionneurs à tester en fonction des applications, missions, contraintes, dimensions, etc ...

Du fait d'une certaine liberté fonctionnelle offerte par les articulations à rotule 20 des liaisons bielles-manivelles, assurant le rattrapage des jeux, entraxes et débattements angulaires et conférant ainsi l'isostatisme du banc, un positionnement précis entre les moteurs-couples 8, 9 et l'actionneur 4 n'est pas nécessaire. En revanche, les capteurs précis de position angulaire 18 des deux moteurs-couples permettent la détermination de l'angle de rotation de l'arbre tournant 3 de l'actionneur 4 à tester même en présence d'une déflexion (flèche) introduite par l'application de la charge radiale fournie par la bielle correspondante (et représentative de l'action des charges aérodynamiques s'exerçant sur la gouverne du missile et, donc, sur l'arbre de l'actionneur).

L'angle de rotation θa de l'arbre de sortie et la déflexion Ya de ce dernier peuvent être déterminés par les formules suivantes (figure 2) :

$$\theta a \ = \ Rm/Ra \ . \ (\theta 1 + \theta 2)/2$$

et

$$Ya = Rm \cdot (\theta1 - \theta2)/2$$

où Rm = bras de levier de la manivelle bielle-moteur-couple
Ra = bras de levier de la manivelle bielle-actionneur
$\theta1$, $\theta2$ = angles de rotation des arbres de sortie des moteurs-couples.

La gestion de l'effort radial et du couple engendrés par les moyens de reproduction 2 de l'invention est réalisée par l'intermédiaire de la raideur calibrée de chaque barre de torsion 10, 11 qui agit comme un capteur de couple ou couplemètre étalonné selon la raideur calibrée (la différence angulaire entre l'angle de torsion à son extrémité avec l'arbre d'entraînement et l'angle de torsion à son extrémité avec la bielle donnant, pour une raideur donnée, un couple déterminé).

Supposons un effort radial Fr et un couple C à exercer sur l'arbre 3 de l'actionneur à tester. Chacun des deux moteurs-couples 8, 9 alors alimentés engendre un couple C1 et C2 et exerce sur les bielles 1 2A et 14A, via les barres 10 et 11, un effort radial F1 et F2.

On a par les relations usuelles de mécanique :

$$F1 = C1/Rm \text{ et } F2 = C2/Rm \text{ (Rm : voir ci-dessus)}$$

$$C = (F1 + F2) \cdot Ra \text{ (Ra : voir ci-dessus)}$$

$$Fr = F1 + F2$$

d'où l'on extrait les efforts et les couples à commander aux deux moteurs-couples :

$$F1 = (C/Ra + Fr)/2 \text{ et } F2 = (C/Ra\text{-}Fr)/2$$

$$C1 = Rm \cdot (C/Ra + Fr)/2 \qquad C2 = Rm \cdot (C/Ra\text{-}Fr)/2$$

A partir de là, les couples C1 et C2 sur les deux moteurs-couples sont fournis de la façon suivante.

On sait que la position angulaire $\theta a$ de l'arbre de l'actionneur est connue en temps réel par calcul à partir des informations des capteurs angulaires 18, 19 envoyés dans le dispositif d'asservissement 21 (voir calcul de $\theta a$ ci-dessus). Chaque moteur-couple est asservi en position par son capteur et les dispositifs électroniques d'asservissement 21 et de puissance 24.

Bien évidemment, la bande passante de l'asservissement est supérieure à celle de l'actionneur 4 à tester pour assurer un suivi approprié avec un déphasage et une atténuation négligeables, sans distorsion des signaux. Pour cela, une bande passante au moins deux fois supérieure est utilisée.

Par ailleurs, un autre avantage de l'asservissement en position de chaque moteur-couple est de réjecter les variations de couple parasite (couple d'encoche ou cogging torque), ainsi que les frottements secs et visqueux (roulements, couples d'hystérésis).

La position angulaire commandée $\theta co$ ($\theta1$, $\theta2$) au moteur-couple 8, 9 est fonction du profil de couple souhaité C1 (ou C2). Ce profil de couple est déterminé avant les tests de manière à faire ce que l'on a décidé de reproduire sur l'arbre de l'actionneur (un couple avec un angle de x°). On sait qu'à chaque instant, on aura tel couple avec tel effort radial. Par exemple, pour un couple à simuler de la forme C1 = $K\theta a$+C0, où K est une raideur aérodynamique (dépendant du point de vol, altitude, vitesse, ...), $\theta a$ est la position angulaire de l'arbre de l'actionneur et C0 est un couple constant indépendant de $\theta a$, et en supposant que la raideur de la barre de torsion soit égale à K0, on commandera un angle $\theta co$ tel que :

$$K0 (\theta\text{-}\theta a) = K\theta a + C0$$

soit θco = (K/K0 + 1) θa + C0/K0 en supposant θ sensiblement égal à θco.

En fait, la fonction de transfert reliant θ à θco résultant de l'asservissement en position du moteur-couple sera de la forme :

$$\theta/\theta co \ = \ 1/(1 + a.p + b.p^2 + c.p^3)$$

avec : b = 1/ω0²
a = 2ξ/ω0
c/b < < 1/ω0
p = Opérateur de Laplace

La pulsation de coupure ω0 est choisie pour être environ deux fois plus élevée que celle de l'actionneur.
ξ = amortissement de la fonction de transfert du deuxième ordre approximée.

Pour améliorer la dynamique du contrôle de couple, il est préférable d'effectuer une avance de phase filtrée sur θco.

Par exemple, les angles θ1 et θ2 des moteurs-couples 8, 9 peuvent couvrir une plage angulaire de plus ou moins 20-25°. Lors d'un test, ces angles θ1 et θ2 ainsi que l'angle θa de l'arbre rotatif 3 de l'actionneur 4 sont bien entendu très proches les uns des autres mais quelque peu différents, compte-tenu de la déflexion Ya de l'arbre rotatif sous l'action des charges radiales issues des bielles.

On ajoute, par ailleurs, que chaque module comporte des moyens électroniques et mécaniques (non représentés sur les figures) pour limiter le débattement et la vitesse angulaires des moteurs-couples de sorte à protéger l'actionneur et à fiabiliser et sécuriser en conséquence le banc.

Ainsi, outre un montage et un démontage rapides des composants du banc en raison de la modularité de celui-ci et de l'absence d'interaction entre lesdits composants, un tel banc dynamique permet une mise au point plus facile des actionneurs, une validation et justification des spécifications vis-à-vis des besoins opérationnels (couple/vitesse, accélération, raideur, ...), une évaluation fiable du profil de vol opérationnel spécifié et une qualification et certification de l'actionneur plus réalistes.

## Revendications

**1.** Banc de charge dynamique destiné à exercer, sur l'arbre rotatif (3) d'un mécanisme à tester (4), tel qu'un actionneur ou analogue, des couples variables délivrés par des moyens commandables de reproduction (2), lesdits moyens commandables de reproduction desdits couples variables se composant de deux modules de reproduction identiques (5, 6), disposés parallèlement et symétriquement par rapport audit arbre rotatif (3) à tester,
**caractérisé en ce que**, pour permettre de plus d'exercer des charges radiales sur ledit arbre rotatif (3), chaque module (5, 6) comporte :

un moteur-couple (8, 9) à arbre d'entraînement (8B, 9B) parallèle audit arbre à tester, lesdits moteurs-couples desdits deux modules tournant dans le même sens ;
une barre de torsion (10, 11) solidaire coaxialement, par l'une de ses extrémités, dudit arbre d'entrainement du moteur-couple ; et
une liaison à bielle-manivelles (12, 13, 14) reliant l'autre extrémité de ladite barre de torsion audit arbre à tester dans un plan perpendiculaire à ce dernier et auxdits arbres d'entraînement, de manière que, dans ledit plan perpendiculaire, lesdites bielles des deux modules soient parallèles et symétriquement décalées de 180° l'une de l'autre par rapport à l'arbre à tester et reliées à leurs arbres d'entraînement respectifs par lesdites manivelles.

**2.** Banc selon la revendication 1, **caractérisé en ce que** ledit arbre d'entraînement (88, 9B) de chaque moteur-couple est creux et présente un passage axial traversant à l'intérieur duquel est intégrée ladite barre de torsion (10, 11) avec l'une de ses extrémités solidaire dudit arbre creux et l'autre extrémité sortant dudit arbre creux et reliée à ladite liaison bielle-manivelles correspondante.

**3.** Banc selon l'une des revendications 1 et 2,
**caractérisé en ce que** lesdites bielles (12A, 14A) des liaisons (12, 14) sont reliées, d'un côté, audit arbre rotatif (3) à tester par une manivelle commune double (13) montée en son centre sur ledit arbre rotatif et portant, à ses extrémités diamétralement opposées par rapport à son centre, lesdites bielles respectivement et, de l'autre côté, auxdites barres de torsion respectives (10, 11) par deux manivelles simples (12B, 14B) identiques, montées décalées de 180° l'une de l'autre sur lesdites barres de torsion.

4. Banc selon l'une des revendications 1 à 3,
**caractérisé en ce que** lesdites bielles (12A, 14A) sont montées sur les manivelles respectives (12B, 14B) desdites liaisons par l'intermédiaire d'articulations à débattement angulaire (20).

5. Banc selon la revendication 4,
**caractérisé en ce que** lesdites articulations à débattement angulaire (20) sont du type sphérique, à rotule.

6. Banc selon l'une quelconque des revendications 3 à 5,
**caractérisé en ce que** l'entraxe de ladite manivelle double (13) séparant l'arbre rotatif à tester de chaque bielle est identique à l'entraxe de chaque manivelle simple (12B, 14B) séparant ladite barre de torsion (10, 11) de ladite bielle correspondante (12A, 14A).

7. Banc selon l'une quelconque des revendications 1 à 6,
**caractérisé en ce que** lesdits moteurs-couples (8, 9) des modules (5, 6) sont électriques du type sans balais.

8. Banc selon l'une quelconque des revendications 1 à 7,
**caractérisé en ce que** lesdites barres de torsion (10, 11) sont calibrées en raideur de torsion.

9. Banc selon l'une quelconque des revendications 1 à 8,
**caractérisé en ce que** chaque module (5, 6) comprend de plus un capteur de position angulaire (18) dudit arbre d'entraînement du moteur-couple et un capteur de position angulaire (19) de ladite barre de torsion correspondante, et **en ce que** lesdits moyens commandables (2) comportent un dispositif électronique d'asservissement (21) de la position angulaire délivrée par chaque capteur desdits moteurs-couples en fonction de la position angulaire de l'arbre rotatif dudit mécanisme à tester, et un dispositif électronique de puissance (24) relié audit dispositif d'asservissement et alimentant lesdits moteurs-couples.

10. Banc selon l'une quelconque des revendications précédentes 1 à 9,
**caractérisé en ce que** chacun des modules (5, 6) comporte des moyens électroniques et/ou mécaniques pour limiter le débattement et la vitesse angulaires de chaque moteur-couple.

## Patentansprüche

1. Dynamische Lastbank, die ausgelegt ist, um auf die Drehwelle (3) eines zu testenden Mechanismus (4), wie z. B. einer Betätigungsvorrichtung oder Ähnlichem variable Drehmomente anzuwenden, die von steuerbaren Reproduktionsmitteln (2) geliefert werden, wobei sich die steuerbaren Reproduktionsmittel der variablen Drehmomente aus zwei identischen Reproduktionsmodulen (5, 6) zusammensetzen, die parallel und symmetrisch mit Bezug auf die zu testende Drehwelle (3) angeordnet sind,
**dadurch gekennzeichnet, dass**, um außerdem zu ermöglichen, radiale Lasten auf die Drehwelle (3) auszuüben, jedes Modul (5, 6) Folgendes umfasst:

ein Motordrehmoment (8, 9) mit Antriebswelle (8B, 9B) umfasst, die parallel zu der zu testenden Welle ist, wobei sich die Motordrehmomente der zwei Module in der gleichen Richtung drehen;
eine Torsionsstange (10, 11), die koaxial durch eines ihrer Enden mit der Antriebswelle des Motordrehmoments fest verbunden ist; und
eine Verbindung Pleuelstange-Kurbelstangen (12 13, 14), die das andere Ende der Torsionsstange mit der zu testenden Welle auf einer senkrechten Ebene zur dieser Letzteren und zu den Antriebswellen verbindet, sodass, auf der senkrechten Ebene, die Pleuelstangen der zwei Module parallel und symmetrisch um 180° voneinander mit Bezug auf die zu testende Welle versetzt sind und mit ihren jeweiligen Antriebswellen durch die Kurbelstangen verbunden sind.

2. Bank nach Anspruch 1,
**dadurch gekennzeichnet, dass** die Antriebswelle (8B, 9B) jedes Motordrehmoments hohl ist und einen querenden axialen Durchgang aufweist, in dessen Inneren die Torsionsstange (10, 11) mit einem ihrer Enden, das mit der hohlen Welle fest verbunden ist, und dem anderen Ende, das aus der hohlen Welle austritt und mit der entsprechenden Verbindung Pleuelstange-Kurbelstange verbunden ist, integriert ist.

3. Bank nach einem der Ansprüche 1 und 2,
**dadurch gekennzeichnet, dass** die Pleuelstangen (12A, 14A) der Verbindungen (12, 14) einerseits mit der zu testenden Drehwelle (3) durch eine doppelte gemeinsame Kurbelstange (13) verbunden sind, die in ihrem Zentrum auf der Drehwelle montiert ist und an ihren diametral entgegengesetzten Enden mit Bezug auf ihr Zentrum jeweils die Pleuelstangen trägt, und andererseits mit den jeweiligen Torsionsstangen (10, 11) durch zwei einfache identische Pleuelstangen (12B, 14B), die um 180° voneinander versetzt auf den Torsionsstangen montiert sind.

4. Bank nach einem der Ansprüche 1 bis 3,
**dadurch gekennzeichnet, dass** die Pleuelstangen (12A, 14A) auf den jeweiligen Kurbelstangen (12B, 14B) der Verbindungen mit Hilfe von Gelenken mit winkligem Bewegungsraum (20) montiert sind.

5. Bank nach Anspruch 4,
**dadurch gekennzeichnet, dass** die Gelenke mit winkligem Bewegungsraum (20) der sphärischen Art mit Kugelgelenk sind.

6. Bank nach einem der Ansprüche 3 bis 5,
**dadurch gekennzeichnet, dass** der Achsabstand der doppelten Pleuelstange (13), der die zu testende Drehwelle von jeder Pleuelstange trennt, identisch mit dem Achsabstand jeder einfachen Pleuelstange (12B, 14B) ist, die die Torsionsstange (10, 11) von der entsprechenden Pleuelstange (12A, 14A) trennt.

7. Bank nach einem der Ansprüche 1 bis 6,
**dadurch gekennzeichnet, dass** die Motordrehmomente (8, 9) der Module (5, 6) elektrisch der Art ohne Bürsten sind.

8. Bank nach einem der Ansprüche 1 bis 7,
**dadurch gekennzeichnet, dass** die Torsionsstangen (10, 11) in Torsionssteifigkeit kalibriert sind.

9. Bank nach einem der Ansprüche 1 bis 8,
**dadurch gekennzeichnet, dass** jedes Modul (5, 6) außerdem einen Sensor der Winkelposition (18) der Antriebswelle des Motordrehmoments und einen Sensor der Winkelposition (19) der entsprechenden Torsionsstange umfasst, und dadurch, dass die steuerbaren Mittel (2) eine elektronische Vorrichtung zur Regelung (21) der Winkelposition, die von jedem Sensor der Motordrehmomente je nach der Winkelposition der Drehwelle des zu testenden Mechanismus geliefert wird, und eine elektronische Leistungsvorrichtung (24) umfasst, die mit der Vorrichtung zur Regelung und Versorgung der Motordrehmomente verbunden ist.

10. Bank nach einem der vorhergehenden Ansprüche 1 bis 9,
**dadurch gekennzeichnet, dass** jedes der Module (5, 6) elektronische und/oder mechanische Mittel umfasst, um den Winkelbewegungsraum und die Winkelgeschwindigkeit jedes Motordrehmoments zu begrenzen.

**Claims**

1. A dynamic load bench adapted for applying, on the rotary shaft (3) of a mechanism to be tested (4), such as an actuator or the like, variable torques provided by controlled reproduction means (2), said controlled reproduction means of said variable torques including two identical reproduction modules (5, 6), arranged parallelly and symmetrically relative to said rotary shaft (3) to be tested, **characterized in that**, in order to further enable to carry out radial loads on said rotary shaft (3), each module (5, 6) comprises:

   a torque motor (8, 9) with a driving shaft (8B, 9B) parallel to said shaft to be tested, said torque motors of said two modules rotating in the same direction;
   a coaxially integral torsional rod (10, 11), through one of its ends, with said driving shaft of the torque motor; and
   a connecting rod-crank connection (12, 13, 14) connecting the other end of said torsional rod to said shaft to be tested in a plane perpendicular to the latter and to said driving shafts, so that, in said perpendicular plane, said connecting rods of the two modules are parallel and symmetrically offset by 180° from each other relative to the shaft to be tested and connected to their respective driving shafts by said cranks.

2. The bench according to claim 1,

**characterized in that** said driving shaft (8B, 9B) of each torque motor is hollow and has a through axial passage inside which said torsional rod (10, 11) is integrated with one of its ends integral with said hollow shaft and the other end going out of said hollow shaft and connected to said corresponding connecting rod-crank connection.

3. The bench according to any of claims 1 and 2,
   **characterized in that** said connecting rods (12A, 14A) of the connections (12, 14) are connected, on one side, to said rotary shaft (3) to be tested by a double common crank (13) mounted on its centre on said rotary shaft and carrying, at its diametrically opposed ends relative to its centre, said connecting rods respectively and, on the other side, to said respective torsional rods (10, 11) by two simple identical cranks (12B, 14B) mounted offset by 180° from each other on said torsional rods.

4. The bench according to any of claims 1 to 3,
   **characterized in that** said connecting rods (12A, 14A) are mounted on the respective cranks (12B, 14B) of said connections by means of angular clearance jointed couplings (20).

5. The bench according to claim 4,
   **characterized in that** said angular clearance jointed couplings (20) are of the spherical knee type.

6. The bench according to any of claims 3 to 5,
   **characterized in that** the distance between axes of said double crank (13) separating the rotary shaft to be tested from each connecting rod is identical to the distance between axes of each simple crank (12B, 14B) separating said torsional rod (10, 11) from said corresponding connecting rod (12A, 14A).

7. The bench according to any of claims 1 to 6,
   **characterized in that** said torque motors (8, 9) of the modules (5, 6) are electric, of the brushless type.

8. The bench according to any of claims 1 to 7, **characterized in that** said torsional rods (10, 11) are calibrated in torsion stiffness.

9. The bench according to any of claims 1 to 8,
   **characterized in that** each module (5, 6) further comprises an angular position sensor (18) of said driving shaft of the torque motor and an angular position sensor (19) of said corresponding torsional rod, and **in that** said controlled means (2) comprise an electronic slaving device (21) for the angular position provided by each sensor of said torque motors as a function of the angular position of the rotary shaft of said device to be tested, and an electronic power device (24) connected to said slaving device and supplying said torque motors.

10. The bench according to any of previous claims 1 to 9,
    **characterized in that** each of the modules (5, 6) comprises electronic and/or mechanical means for limiting the angular clearance and speed of each torque motor.

Fig. 1

Fig. 2

Fig. 3

**EP 2 261 630 B1**

## RÉFÉRENCES CITÉES DANS LA DESCRIPTION

### Documents brevets cités dans la description

- US 7080565 B
- EP 0239264 A